Europäisches Patentamt

European Patent Office

Office européen des brevets

(11) Veröffentlichungsnummer: **0 213 235**
**A1**

(12) **EUROPÄISCHE PATENTANMELDUNG**

(21) Anmeldenummer: **85111716.8**

(22) Anmeldetag: **17.09.85**

(51) Int. Cl.⁴: **B 23 K 37/04**

(30) Priorität: **31.08.85 DE 3531192**

(43) Veröffentlichungstag der Anmeldung:
**11.03.87 Patentblatt 87/11**

(84) Benannte Vertragsstaaten:
**AT BE CH DE FR GB IT LI LU NL SE**

(71) Anmelder: **Ludscheidt GmbH**
**Westfälische Strasse 171**
**D-4600 Dortmund 12(DE)**

(72) Erfinder: **Ludscheidt, Horst**
**Westfälische Strasse 171**
**D-4600 Dortmund 12(DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1(DE)**

(54) Brennschneidtisch.

(57) Mit einem Brennschneidtisch (1) mit einem Auflagerost (5) für die zu schneidenden Metallplatten und einer Absaugvorrichtung zum Absaugen der beim Brennschneiden entstehenden Gase, soll eine Lösung geschaffen werden, mit der die Absaugung im unmittelbaren Brennbereich möglich gemacht wird, so daß die Saugleistung der entsprechenden Gebläse auf ein vergleichsweise geringes Maß senkbar ist.

Dies wird dadurch erreicht, daß unterhalb des Auflagerostes (5) ein verfahrbarer Saugtrichter (10) angeordnet ist, dessen Absaugstutzen (11) in einem an einem stationär unterhalb des Brennschneidtisches angeordneten Absaugkanal (13) verfahrbaren Saugwagen (12) mündet.

Fig. 1

EP 0 213 235 A1

## "Brennschneidtisch"

Die Erfindung richtet sich auf einen Brennschneidtisch mit einem Auflagerost für die zu schneidenden Metallplatten und einer Absaugvorrichtung zum Absaugen der beim Brennschneiden entstehenden Gase.

Es sind beispielsweise Brennschneidtische der gattungsgemäßen Art der Firma A.E. Sturm GmbH aus 5650 Solingen bekannt, bei denen der Auflagerost aus einer Vielzahl pyramidenförmig ausgebildeten, mit ihrer Spitze die zu schneidende Metallplatte unterstützenden Trägern ausgebildet ist. Diese Träger sind im unteren Bereich außen wenigstens bereichsweise von einem Saugkanal umgeben.

Ein wesentlicher Nachteil des bekannten Tisches ist darin zu sehen, daß Gebläse mit sehr hoher Leistung vorgesehen sein müssen, da zum einen die pyramidenförmigen Spitzen einen großen Bereich an Fremdlufteinfall möglich machen und zum anderen über den gesamten unteren Tischbereich abgesaugt werden muß, unabhängig davon, wo sich die Brennerflamme gerade befindet.

Aufgabe der Erfindung ist die Schaffung einer Lösung, mit der die Absaugung im unmittelbaren Brennerbereich möglich gemacht wird, so daß die Saugleistung des entsprechenden Gebläses auf ein vergleichsweise geringes Maß senkbar ist.

0213235

Bei einem Brenntisch der eingangs bezeichneten Art wird
diese Aufgabe gemäß der Erfindung dadurch gelöst, daß unterhalb des Auflagerostes ein verfahrbarer Saugtrichter angeordnet ist, dessen Absaugstutzen in einem an einem stationär unterhalb des Brennschneidtisches angeordneten Absaugkanal verfahrbaren Saugwagen mündet.

Mit der Erfindung wird erreicht, daß der Saugtrichter mit
dem Brenner mitgeführt werden kann. Durch die vom Saugtrichter abgedeckte Fläche unterhalb des Tisches wird jeweils nur ein Bereich abgesaugt, nämlich gerade derjenige,
über dem sich die Gase unterhalb der Metallplatten entwickeln. Die Saugleistung der zugehörigen Gebläse kann daher vergleichsweise gering gehalten werden, wobei gleichzeitig die Effektivität der Absaugung höher ist als bei
der bekannten Lösung.

In Ausgestaltung sieht die Erfindung vor, daß der Saugtrichter mit einer Auffangkammer für die beim Schneiden
entstehenden Feststoffpartikel ausgerüstet ist. Mit dieser
Gestaltung wird erreicht, daß die Feststoffe zwar aufgefangen werden, nicht aber in das Absaugsystem gelangen und damit dort evtl. Filter nicht zusätzlich belasten.

Um diese Wirkung zu erhöhen, ist in weiterer Ausgestaltung
vorgesehen, daß die Auffangkammern in ihren dem Auflagerost zugewandten oberen Randbereich mit dem Absaugschlitz des Saugtrichters versehen ist. Mit dieser Gestaltung ist eine Art Zyklonenwirkung verbunden, d.h. die vom Brennerstrahl nach unten geschleuderten Partikel werden von der Auffangkammer aufgefangen und bleiben an deren Boden liegen, während die Gase durch den Absaugschlitz des Saugtrichters abgesogen werden.

In weiterer Ausgestaltung sieht die Erfindung vor, daß die Auffangkammer mit ihrem oberen Randbereich bis unmittelbar unter die Unterseite des Auflagerostes geführt ist. Dieses dichte Heranführen bringt mit sich, daß der Fremdlufteinfall auf ein ganz geringes Maß reduziert wird. Umgebungsluft kann praktisch nur durch die Schlitze zwischen der Oberkante der Auffangkammer und den Unterkanten des Auflagerostes in das System gelangen, es sei denn, die zu schneidenden Metallplatten würden nicht die gesamte Oberfläche des Tisches bedecken, so daß auch randseitig Fremdluft einfallen könnte.

Zweckmäßig kann es sei, wenn der Saugtrichter mit Auffangkammern über randseitige Führungsschienen an Laufrollen geführt ist, wenngleich die Erfindung nicht auf diese spezielle Gestaltung beschränkt ist. Allerdings sind z.B. nach unten offene, im wesentlichen querschnittlich C-förmige Laufschienen, in denen Laufrollen geführt sind, besonders zweckmäßig, da sie in Richtung des Schneidstrahles bzw.

Brennstrahles geschlossen und damit vor Verschmutzung geschützt sind.

Um den Saugtrichter mit der Auffangkammer immer unter den Brennstrahl zu halten, sieht die Erfindung vor, daß zum Verfahren wenigstens eine unterhalb des Tisches angeordnete Antriebskette vorgesehen ist. Ein derartiger Kettenantrieb ist einfach zu warten, leicht zu handhaben und zu steuern und im wesentlichen sehr funktionstüchtig. So können hier beispielsweise in Kunststoffgleitschienen laufende Antriebsketten vorgesehen sein, die ohne Schmierung betrieben werden können. Der Antrieb der Kette kann mit der Steuerung des Brennstrahles synchronisiert sein, so daß ein vollautomatisches Arbeiten bei gleichzeitiger Schadstoffabsaugung möglich ist.

Die Erfindung sieht auch vor, daß der Auflagerost von einzelnen auswechselbaren Gitterstäben bzw. Rostlamellen gebildet ist, wobei die Breite der Auffangkammer mit dem Absaugtrichter wenigstens dem doppelten Abstandmaß benachbarter Gitterstäbe entspricht. Diese Gestaltung dient einmal der Reduzierung des Fremdlufteinfalles, zum anderen können die Rostlamellen aus einfachen Blechen, hochkant gestellt, gebildet sein, so daß sie leicht und konstengünstig ausgewechselt werden können, da nicht zu verhindern ist, daß der Brenner auch Teile des Auflagerostes bei den Trennvorgängen mit in Anspruch nimmt.

Die Auffangkammer ist nach der Erfindung auch mit einer schließbaren bodenseitigen Öffnung zur Entnahme der Feststoffpartikel ausgerüstet. Ist beispielsweise die Auffangkammer selbst ebenfalls trichterförmig gestaltet, kann in ihrer nach unten zulaufenden Spitze ein schubladenähnliches Element vorgesehen sein, mit dem dann die Entleerung der Feststoffpartikel besonders einfach bewerkstelligt werden kann.

Um eine möglichst hohe Lebensdauer zu erreichen, sieht die Erfindung auch vor, daß die Auffangkammer und/oder der Saugtrichter mit einer hitzebeständigen Beschichtung ausgerüstet sind.

Zweckmäßig ist der Tisch aus einzelnen Segmenten in Modulbauweise ausgestaltet, d.h. durch Zusammenfügen mehrerer Module können Tische unterschiedlicher Größenausdehnung geschaffen werden, d.h. das diese Module hintereinander und/oder nebeneinander angeordnet sind.

Die Erfindung ist nachstehend anhand der Zeichnung beispielsweise näher erläutert. Diese zeigt in

Fig. 1 eine perspektivische, vereinfachte Darstellung eines Brennschneidtisches mit nur einigen Elementen,

Fig. 2 eine Seitenansicht des Tisches,

Fig. 3 eine stirnseitige Ansicht des Tisches und in

Fig. 4 die vergrößerte Darstellung einer Rostlamelle.

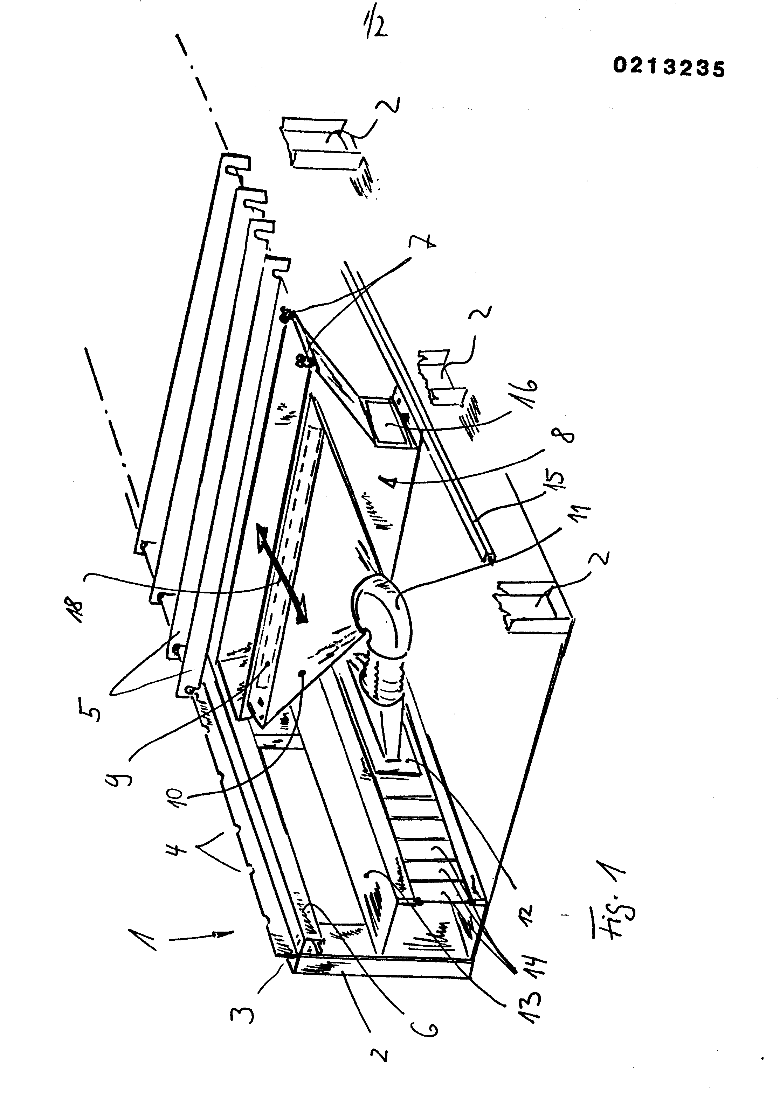

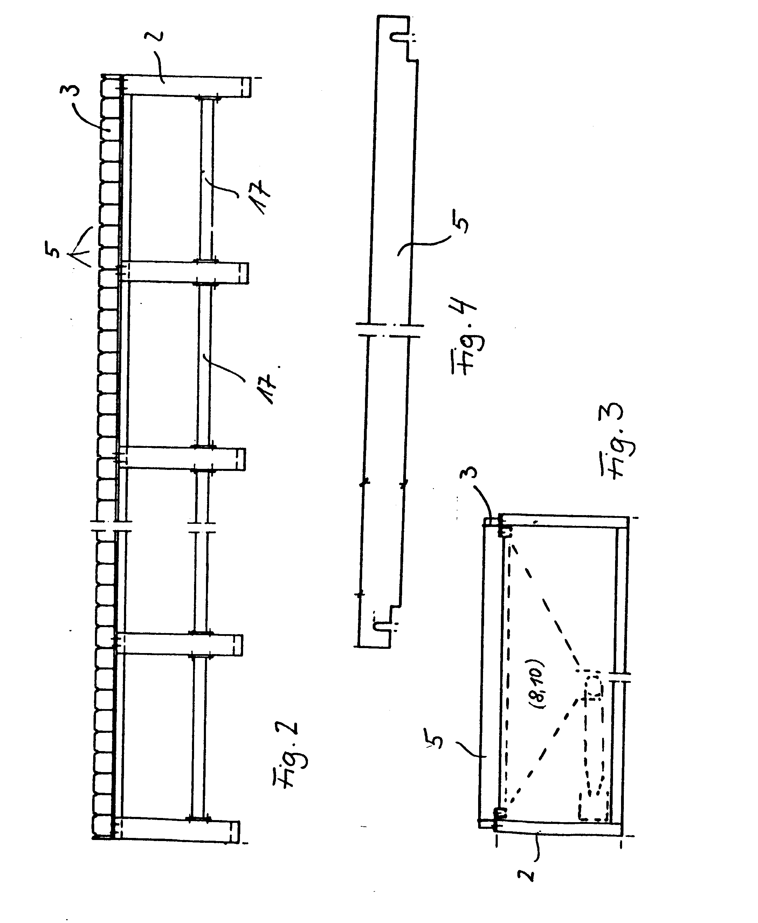

Der allgemein mit 1 bezeichnete Brennschneidtisch weist
Stützen 2 auf, die in einem Rastermaß zueinander angeordnet sind und über gleichlange Querstreben 17 miteinander
verbunden sind, was in der Figur 2 näher dargestellt ist.
In ihrem Kopfbereich tragen diese Stützen 2 ein T-Profil
3, dessen T-Steg nach oben weisend angeordnet ist, während
die T-Schenkel horizontal liegend angeordnet sind. Der
nach außen weisende T-Schenkel ist mit dem Kopfbereich der
Stützen 2 verschraubt.

Der T-Steg weist periodische beabstandete Einkerbungen 4
auf, die von Ausnehmungen von in Fig. 4 näher dargestellten Rostlamellen 5 derart übergriffen werden, daß die
Stirnseiten zwischen benachbarten Rostlamellen praktisch
geschlossen ausgebildet sind.

Die Rostlamellen bzw. Gitterstäbe 5 bestimmen die Tischbreite eines Modules. Ihr Einbau und ihre besondere Gestaltung ergibt sich aus den Figuren 2 bis 4.

An der Unterseite des nach innen weisenden T-Schenkels ist je ein nach unten offenes C-Profil 6 angebracht. Dieses C-Profil 6 stellt je eine Laufschiene für Laufrollen 7 am oberen Randbereich einer Auffangkammer 8 für Feststoffpartikel dar, die unterhalb der Rostlamellen 5 verfahrbar angeordnet ist, wie sich dies insbesondere aus Fig. 1 ergibt (Doppelpfeil 18).

Die Auffangkammer 8 weist an ihrem oberen Randbereich, d.h. dem Randbereich, der der Unterseite der Rostlamellen 5 zugewandt ist, einen in Fig. 1 gestrichelt dargestellten Absaugschlitz 9 auf, der praktisch über die gesamte Länge der Auffangkammer 8 ausgebildet ist. Dieser Absaugschlitz 9 korrespondiert mit einem Saugtrichter 10, dessen Absaugstutzen 11 mit einem Saugwagen 12 verbunden ist.

Der Saugwagen 12 ist an einem Absaugkanal 13 verfahrbar angeordnet, wobei dieser Absaugkanal 13 als sogenannter Kulissenkanal aus Leichtmetall mit hitzebeständigen Dichtlamellen 14 ausgerüstet ist, die vom Saugwagen 12 in eine Stellung verschoben werden, derart, daß der Saugstutzen 11 mit dem Inneren des Absaugkanales 13 verbunden ist.

Nicht dargestellt ist, daß der Absaugkanal 13 mit einer Vakuumquelle in Verbindung steht, d.h. Gase, die oberhalb oder in der Auffangkammer 8 entstehen, werden durch den Saugschlitz 9 und dem Saugtrichter 10 über den Absaugstut-

0213235

zen 11 und dem Saugwagen 12 in den Absaugkanal 13 eingesogen.

Bei dem Absaugkanal 13 kann es sich beispielsweise um einen solchen nach dem europäischen Patent 0 022 456 oder dem entsprechenden deutschen Patent 30 60 616 des Anmelders handeln.

Die Wirkungsweise des Brennschneidtisches mit seinen Einrichtungen ist dabei die folgende:

Befindet sich ein Werkstück, z.B. eine Metallplatte, die es zu zertrennen gilt, auf dem Brennschneidtisch und beginnt der Trennvorgang mit einem nicht näher dargestellten Brenner oberhalb der Platte, so wird die Auffangkammer 8 mit dem Saugtrichter 10 unter den Arbeitsbereich des Brenners über eine motorgetriebene Antriebskette, von der in Fig. 1 nur die Führungsschiene 15 dargestellt ist, verfahren. Bei der Brennerbewegung wird die Auffangkammer 8 jeweils mitgeführt und die Feststoffpartikel werden dabei in der Auffangkammer 8 gesammelt. Durch den Absaugschlitz 9 werden die Gase abgesaugt und über den Absaugkanal 13 wegtransportiert.

Durch eine Klappe oder eine Schublade 16 im Bodenbereich der Auffangkammer 8 können die Feststoffpartikel entnommen werden.

Durch die Modulbauweise, d.h. die Aneinanderführung segmentartig gleicher Teile, wie in Fig. 2 angedeutet, können Tische in beliebiger Abmessung ausgebildet werden. Reicht die Arbeitsbreite eines Tischsegmentes nicht aus, die von den Gitterstäben bzw. Rostlamellen 5 bestimmt ist, können gleichartig gestaltete Tische nebeneinander gestellt werden, diese sind dann ebenfalls mit einer eigenen Absaugeinrichtung versehen. Die Bewegung der jeweiligen Absaugtrichter 10 mit den Auffangkammern 8 kann dann entsprechend synchronisiert werden.

Natürlich ist das beschriebene Ausführungsbeispiel der Erfindung noch in vielfacher Hinsicht abzuändern ohne den Grundgedanken zu verlassen. So können die Lamellen 5 auch in stabförmiger Ausgestaltung sein, als Hohlrohre od. dgl. Die einfache Lamellengestaltung ist aber besonders zweckmäßig, da diese Lamellen beim Benutzen der Brenneinrichtungen teilweise zerstört werden und nach gewissen Zeiträumen ausgewechselt werden müssen.

Je nach Einsatzgebiet kann eine Auffangkammer 8 auch beidseitig mit Absaugschlitzen 9 und jeweiligen Absaugstutzen mit Saugtrichtern ausgerüstet sein. Die Steuerung kann über die Elektronik der Brennersteuerung mitübernommen werden u. dgl. mehr.

Patentansprüche:

1. Brennschneidtisch mit einem Auflagerost für die zu schneidenden Metallplatten und einer Absaugvorrichtung zum Absaugen der beim Brennschneiden entstehenden Gase,
dadurch gekennzeichnet,
daß unterhalb des Auflagerostes (5) ein verfahrbarer Saugtrichter (10) angeordnet ist, dessen Absaugstutzen (11) in
einem an einem stationär unterhalb des Brennschneidtisches
angeordneten Absaugkanal (13) verfahrbaren Saugwagen (12)
mündet.

2. Brennschneidtisch nach Anspruch 1,
dadurch gekennzeichnet,
daß der Saugtrichter (10) mit einer Auffangkammer (8) für
die beim Schneiden entstehenden Feststoffpartikel ausgerüstet ist.

3. Brennschneidtisch nach Anspruch 1 oder 2,
dadurch gekennzeichnet,
daß die Auffangkammer (8) in ihrem dem Auflagerost (5) zugewandten oberen Randbereich mit dem Absaugschlitz (9) des
Saugtrichters (10) versehen ist.

4. Brennschneidtisch nach einem der vorangehenden Ansprüche,
dadurch gekennzeichnet,

0213235

daß die Auffangkammer (8) mit ihrem oberen Randbereich bis
unmittelbar unter die Unterseite des Auflagerostes (5) geführt ist.

5. Brennschneidtisch nach einem der vorangehenden Ansprüche,
dadurch gekennzeichnet,
daß der Saugtrichter (10) mit der Auffangkammer (8) über
randseitige Führungsschienen (6) an Laufrollen (7) geführt
ist.

6. Brennschneidtisch nach einem der vorangehenden Ansprüche,
dadurch gekennzeichnet,
daß zum Verfahren des Saugtrichters (10) wenigstens eine
unterhalb des Tisches angeordnete Antriebskette (15) vorgesehen ist.

7. Brennschneidtisch nach einem der vorangehenden Ansprüche,
dadurch gekennzeichnet,
daß der Auflagerost von einzelnen auswechselbaren Gitterstäben oder Rostlamellen (5) gebildet ist, wobei die Breite der Auffangkammer (8) mit dem Absaugtrichter (10) wenigstens dem doppelten Abstandmaß benachbarter Gitterstäbe
_(5) entspricht.

8. Brennschneidtisch nach einem der vorangehenden Ansprüche,
dadurch gekennzeichnet,
daß die Auffangkammer (8) mit einer schließbaren bodensei-

tigen Öffnung (16) zur Entnahme der Feststoffpartikel ausgerüstet ist.


9. Brennschneidtisch nach einem der vorangehenden Ansprüche, dadurch gekennzeichnet,

daß die Auffangkammer (8) und/oder der Saugtrichter (10) mit einer hitzebeständigen Beschichtung ausgerüstet sind.


10. Brennschneidtisch nach einem der vorangehenden Ansprüche, dadurch gekennzeichnet,

daß der Tisch (1) aus einzelnen Segmenten in Modulbauweise

ausgebildet ist.

Fig. 1

0213235

Fig. 2

Fig. 4

Fig. 3

**EUROPÄISCHER RECHERCHENBERICHT**

| | **EINSCHLÄGIGE DOKUMENTE** | | EP 85111716.8 |

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | CH - A - 616 101 (A LINDKWIST)<br>* Gesamt *<br>-- | 1-5,7,<br>8,10 | B 23 K 37/04 |
| X | DD - A - 204 868 (VEB)<br>* Fig. 1 *<br>---- | 1 | |

RECHERCHIERTE SACHGEBIETE (Int. Cl 4)

B 23 K 7/00
B 23 K 37/00

Der vorliegende Recherchenbericht wurde für alle Patentansprüche erstellt.

| Recherchenort | Abschlußdatum der Recherche | Prüfer |
|---|---|---|
| WIEN | 09-11-1986 | BENCZE |